# EUROPEAN PATENT APPLICATION

(11) **EP 2 651 140 A1**
(43) Date of publication of application: **16.10.2013**
(21) Application number: 13176236.1
(22) Date of filing: 09.05.2008
(51) Int. Cl.: H04N 13/00

(54) **Method and apparatus for stereoscopic data processing based on digital multimedia broadcasting**

(30) Priority: 12.12.2007 KR 20070129343
(62) Divisional of application: 08753406.1
(71) Applicant: Electronics and Telecommunications Research Institute, Daejeon 305-700 (KR)
(72) Inventor: Yun, Kug Jin, 305-759 Daejeon (KR); Lee, Bong Ho, 305-752 Daejeon (KR); Lee, Hyun, 302-120 Daejeon (KR); Hur, Nambo, 305-768 Daejeon (KR); Kim, Jin Woong, 305-761 Daejeon (KR); Lee, Soo In, 302-120 Daejeon (KR)
(74) Representative: Betten & Resch

(57) **Abstract**

A stereoscopic data processing method and apparatus to provide service of stereoscopic data interoperating with digital multimedia broadcasting (DMB) is provided. The stereoscopic data processing method, including: receiving a transmission stream (TS) including a program map table from an external device; recognizing stereoscopic program information descriptor in the program map table; and recognizing defined bit values in the stereoscopic program information descriptor and processing data.

## Description

### Technical Field

The present invention relates to a stereoscopic data processing method and apparatus to provide service of stereoscopic data interoperating with digital multimedia broadcasting (DMB).

This work was supported by the IT R&D program of MIC/IITA. [2007-S-004-01, Development of glassless single-user 3D broadcasting technologies]

### Background Art

In a conventional art, a broadcasting service may provide a user with a three dimensional (3D) broadcasting program using the following two methods. In one method, a user separately sets a broadcasting service apparatus of a receiving end and directly converts a broadcasting program providing mode. In the other method, when a transmitting end additionally inserts and provides a recognition code of a 3D broadcasting program in a particular location of image data, a broadcasting service apparatus of a receiving end analyzes the recognition code and converts the recognition code into a 3D broadcasting program providing mode.

However, when a user directly inputs a conversion of a broadcasting program providing mode, the user arbitrarily selects a broadcasting program providing mode regardless of a provided broadcasting program providing mode, which causes inconvenience and inefficiency. Also, in the method of inserting a recognition code of 3D broadcasting in image data, the recognition data is required to be extracted and analyzed. In this instance, another module is required to be added in a broadcasting service apparatus, which causes an increase in complexity of a broadcasting service apparatus.

### Disclosure of Invention

### Technical Problem

The present invention provides a stereoscopic data processing method and apparatus interoperating with digital multimedia broadcasting (DMB) using a program map table structure and object descriptor structure to provide a service of stereoscopic data interoperating with DMB.

The present invention also provides a stereoscopic data processing method and apparatus interoperating with DMB using a program map table structure which defines a descriptor in a program map table and recognizes whether a provided broadcasting type is two dimensional (2D) or three dimensional (3D) broadcasting.

The present invention also provides a stereoscopic data processing method and apparatus interoperating with DMB which may easily control a detail module of a 3D DMB terminal and an automatic barrier conversion in the 3D DMB terminal through a descriptor of a program map table.

The present invention also provides a stereoscopic data processing method and apparatus interoperating with DMB which may define a service type of a descriptor of a program map table and dependent/independent stream concepts of an object descriptor, maintain compatibility with an existing DMB terminal, and describe stereoscopic contents.

### Technical Solution

According to an embodiment of the present invention, there is provided a stereoscopic data processing method, including: receiving a transmission stream (TS) including a program map table from an external device; recognizing stereoscopic program information descriptor in the program map table; and recognizing defined bit values in the stereoscopic program information descriptor and processing data.

In an aspect of the present invention, the recognizing and processing includes: recognizing three dimensional (3D) contents flag value in the stereoscopic program in-formation descriptor, the 3D contents flag value indicating whether broadcasting contents or program includes a 3D service; and turning on a parallax barrier according to a result of the recognizing.

According to an embodiment of the present invention, there is provided a stereoscopic data processing method, including: defining a stereoscopic program information descriptor in a program map table, the stereoscopic program information descriptor including property information of data and control information about a receiving terminal; and transmitting, to an external device, the program map table where the stereoscopic program information descriptor is defined.

In an aspect of the present invention, the defining defines a descriptor tag value in the stereoscopic program information descriptor, and defines the descriptor tag value as a user private value.

According to another embodiment of the present invention, there is provided a stereoscopic data processing apparatus, including: a program map table parsing unit receiving a transmission stream from an external device and parsing a program map table included in the received transmission stream; a descriptor recognition unit recognizing a stereoscopic program information descriptor in the program map table; and an operation control unit recognizing whether broadcasting contents or program includes a 3D service based on a bit value of the stereoscopic program information descriptor recognized in the descriptor recognition unit, and controlling an operation of a receiving terminal according to whether the 3D service is included.

### Advantageous Effects

According to the present invention, a stereoscopic data processing method and apparatus interoperating with digital multimedia broadcasting (DMB) is provided which may recognize whether a provided broadcasting type is two dimensional (2D) or three dimensional (3D) broadcasting through a new descriptor of a program map table, may enable stereoscopic data to be easily differentiated when monoscopic data and the stereoscopic data are reproduced together in a particular scene, and may perform an automatic barrier conversion and a detail module control.

### Brief Description of the Drawings

FIG. 1 is a block diagram illustrating a configuration of a stereoscopic data processing apparatus according to an embodiment of the present invention;
FIG. 2 is a diagram illustrating a configuration of a program map table according to an embodiment of the present invention;
FIG. 3 is a diagram illustrating a configuration of a stereoscopic program information descriptor according to an embodiment of the present invention;
FIG. 4 is a flowchart illustrating a stereoscopic data processing method in a data receiving end according to an embodiment of the present invention; and
FIG. 5 is a flowchart illustrating a stereoscopic data processing method in a data transmitting end according to an embodiment of the present invention.

### Mode for the Invention

In the present invention, stereoscopic data processing method and apparatus to provide service of stereoscopic data interoperating with a video or audio is provided, and a stereoscopic data broadcasting service, that is, three dimensional (3D) broadcasting service, refers to a program including stereoscopic data. Also, the 3D broadcasting service includes a service broadcasted for a particular time and a service continuously broadcasted.

In the present invention, stereoscopic data includes a stereoscopic text and stereoscopic still image. Also, monoscopic data refers to a two dimensional (2D) still image in a conventional art.

In the present invention, a digital multimedia broadcasting (DMB) stereoscopic video service refers to a stereoscopic video service provided via a terrestrial/satellite DMB network. Also, the DMB stereoscopic video service has a forward/backward compatibility with a DMB video service in a conventional art.

A stereoscopic data service interoperating with a DMB video refers to a service providing a stereoscopic text and stereoscopic still image interoperating with a video.

A stereoscopic data service interoperating with a DMB audio refers to a service providing a stereoscopic text, stereoscopic still image, or low frame rate stereoscopic video interoperating with audio.

A stereoscopic data service which is independent of a DMB program refers to a service providing a stereoscopic text and stereoscopic still image independently of a video and audio.

A DMB stereoscopic data service refers to a stereoscopic data service interoperating with a video, stereoscopic data service interoperating with an audio, and stereoscopic data service independent of a program.

Also, a DMB stereoscopic service refers to the stereoscopic data service interoperating with the DMB video and stereoscopic data service interoperating with the DMB audio.

Hereinafter, embodiments of the present invention are described in detail by referring to the figures.

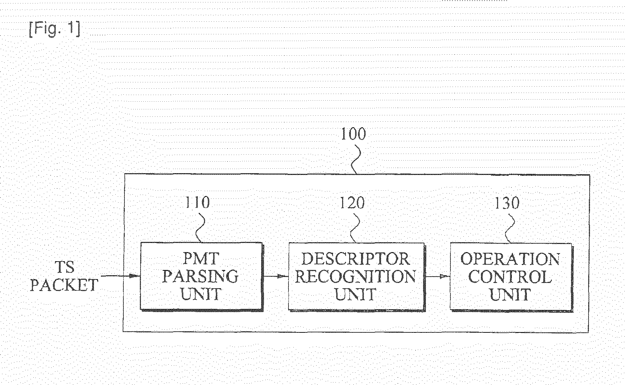

FIG. 1 is a block diagram illustrating a configuration of a stereoscopic data processing apparatus according to an embodiment of the present invention.

Stereoscopic data is generally transmitted in a form of a multiplexed transmission stream (TS) packet. A receiving terminal 100 receives the transmitted TS packet, and includes a program map table parsing unit 110. The program map table parsing unit 110 parses a program map table included in the received TS packet. In general, the program map table is transmitted at every 500 ms. When a version of received program map table is different from that of existing program map table, the received program map table is updated with a new program map table version. The program map table includes a packet identifier (PID) of a media data elementary stream, a descriptor, and an initial object descriptor (IOD) to be initially transmitted for a scene composition. Accordingly, the program map table provides information actually configuring a program.

The receiving terminal 100 includes a descriptor recognition unit 120. The descriptor recognition unit 120 recognizes a stereoscopic program information descriptor (Stereoscopic_Programlnfo_Descriptor) and recognizes a corresponding bit. Stereoscopic_ProgramInfo_Descriptor is a new descriptor defined in the parsed program map table.

Also, the receiving terminal 100 includes an operation control unit 130. The operation control unit 130 processes stereoscopic data through the defined bit of the Stereoscopic_ProgramInfo_Descriptor, recognized by the descriptor recognition unit 120, and controls an operation. The receiving terminal 100 may perform a detail module control and a barrier conversion through the operation control unit 130.

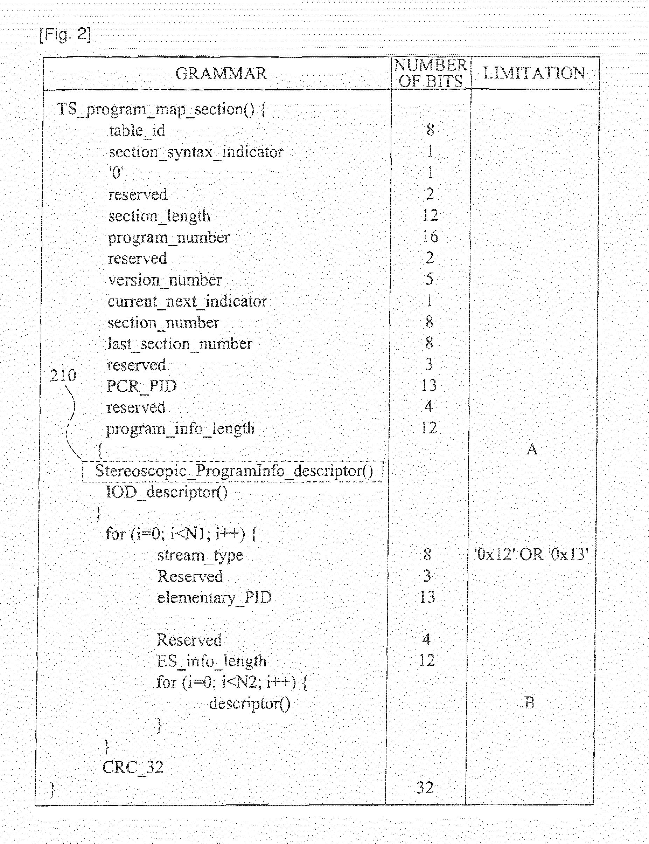

FIG. 2 is a diagram illustrating a configuration of a program map table according to an embodiment of the present invention.

Stereoscopic_ProgramInfo_Descriptor 210 of the program map table indicates a broadcasting type actually provided. Stereoscopic_ProgramInfo_Descriptor 210 indicates whether a TS packet is for 2D or 3D broadcasting. Stereoscopic_ProgramInfo_Descriptor 210 is located after Program_Info_Length. Also, descriptor_tag of Stereoscopic_ProgramInfo_Descriptor 210 is set as a user private value, and thus a terminal in a convention art (set-top) may not interpret and ignores descriptor_tag. Accordingly, compatibility with an existing tenninal is maintained.

Also, a broadcasting service is sorted through Stereoscopic_ProgramInfo_Descriptor 210. Also, an automatic barrier conversion and detail module control may be easily performed in a 3D DMB terminal.

A configuration of the program map table illustrated in FIG. 2 may be applied to a stereoscopic video service as well as a stereoscopic data service. Also, the program map table may be applied to a DMB and other digital broadcastings such as a terrestrial, cable, Internet Protocol Television (IPTV), and satellite broadcasting.

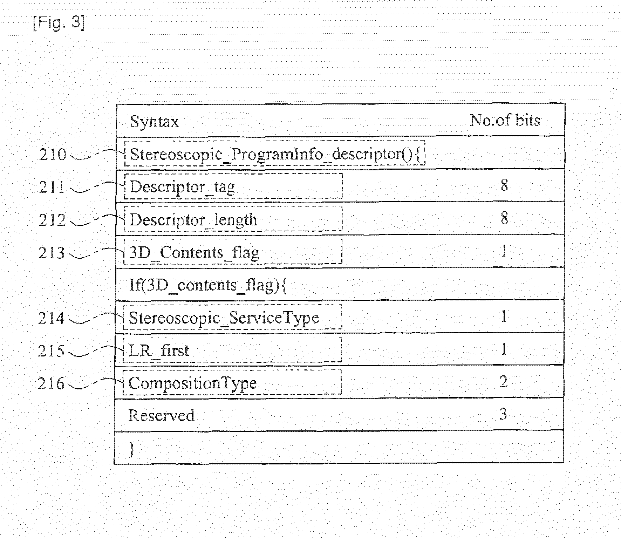

FIG. 3 is a diagram illustrating a configuration of a stereoscopic program information descriptor according to an embodiment of the present invention.

Descriptor_tag 211 of the stereoscopic program information descriptor indicates a tag value, and eight bits are allocated. Also, compatibility with an existing terminal may be maintained by referring to a value of a user private area using the tag value. That is, since an existing 2D terminal may disregard the user private value of Descriptor_tag 211, the 2D terminal may disregard the stereoscopic program information descriptor. Accordingly, the 2D terminal may maintain compatibility with the existing terminal.

Also, Descriptor_length 212 indicates length information, and eight bits are allocated. 3D_Contents_flag 213 indicates whether broadcasting contents or program includes a 2D or 3D data, and one bit is allocated. For example, when 3D_Contents_flag 213 is 0, it indicates a 2D broadcasting contents or program. When 3D_Contents_flag 213 is 1, it indicates a 3D broadcasting contents or program. In this instance, a 3D DMB terminal turns on or turns off a parallax barrier based on a value of 3D_Contents_flag 213. That is, when 3D_Contents_flag 213 is 1, it indicates the 3D broadcasting contents or program, and thus the parallax barrier is controlled to be turned on.

Also, when 3D_Contents_flag 213 is 1, that is, the 3D broadcasting contents or program is included, an if-clause of the stereoscopic program information descriptor is performed. Each value of the if-clause is defined as follows.

First, Stereoscopic_Service_Type 214 indicates which one of stereoscopic video service or stereoscopic data service is currently provided, and one bit is allocated. Specifically, when Stereoscopic_Service_Type 214 is 0, it indicates the stereoscopic data service is provided. When Stereoscopic_Service_Type 214 is 1, it indicates the stereoscopic video service is provided. In this instance, a service type is associated with a Moving Picture Experts Group-4 (MPEG-4) object descriptor (OD) describing media stream information. That is, when Stereoscopic_Service_Type 214 is 0, an MPEG-4 OD for describing the stereoscopic data includes an elementary stream (ES) structure of an independent/dependent type. When Stereoscopic_Service_Type 214 is 1, an MPEG-4 OD for describing the stereoscopic video includes an ES structure of an independent/dependent type.

In this instance, in a stereoscopic data broadcasting service, a basic audio video (AV) is basically identical to an existing 2D DMB, only data (still image) is stereoscopically replayed. An OD structure of the basic AV is identical to that of the existing 2D DMB. However, the still image stereoscopically replayed basically includes left image data and right image data. For example, in Joint Photographic Experts Group (JPEG) of a reference still image, "StreamType=0x04" and "ObjectTypeIndication=0x6C" are set to maintain compatibility with a 2D DMB terminal. In an additional still image, the additional still image is a subordinate type of the reference still image, and "StreamType=0x04" and "ObjectTypeIndication=0xA0" are set. In this instance, StreamDependenceFlag and DependsOn_ES_ID are used. The 2D DMB terminal may disregard an ObjectType of the additional still image, and may ignore a related TS packet. Table 1 illustrates ObjectTypeIndication provided to define the additional still image for the stereoscopic data service.

**[Table 1] ObjectTypeIndication value of additional still image**

| Type | Value |
|---|---|
| SAdditional JPEG | 0xA0 |
| SAdditional PNG | 0xA1 |
| MNG | 0xA2 |
| SAdditional MNG | 0xA3 |

Also, when monoscopic data and stereoscopic data are used together in a particular scene, an ObjectType defined in Table 1 is used to differentiate the monoscopic data and stereoscopic data. That is, the stereoscopic data includes an elementary stream descriptor (ESD) in a dependent form and an ESD in an independent form under a single OD. When the ObjectType defined in Table 1 is included, it indicates the stereoscopic data. When the ObjectType defined in Table 1 is not included, it indicates the monoscopic data.

A multiple-image network graphics (MNG) format is not included in a 2D DMB broadcasting service, and is newly added for a stereoscopic data service. The 2D DMB terminal may disregard ObjectTypeIndication, and thereby may satisfy compatibility.

Table 2 illustrates an example of an OD structure for the stereoscopic data service. Basically, a binary format for scenes (BIFS) is identically used to maintain compatibility with the 2D DMB terminal.

**[Table 2] example of OD structure for stereoscopic data broadcasting service**

| | ES_ID | OD_ID | BIFS URL |
|---|---|---|---|
| Audio stream | 4 | 3 | 3 |
| Video stream | 3 | 2 | 2 |
| Reference still image stream | 8 | 4 | 4 |
| Additional still image stream | 9 | | |

| No. of bits | Field name | value |
|---|---|---|
| **ObjectDescriptor(video)** | | |
| 8 | ObjectDescriptor tag | 0x01 |
| 10 | ObjectDescriptorID | 2 |

| **ES_Descriptor(video)** | | |
|---|---|---|
| 8 | ES_Descriptor tag | 0x03 |
| 16 | ES_ID | 3 |

| **DecoderConfigDescriptor(video)** | | |
|---|---|---|
| 8 | DecoderConfigDescriptor tag | 0x04 |
| 8 | ObjectTypeIndication | 0x21 |
| 6 | Stream Type | 0x04 |

| **DecoderSpecificInfo(video)** | | |
|---|---|---|
| 8 | DecoderSpecificInfo tag | 0x05 |

| **SLConfigDescriptor(video)** | | |
|---|---|---|
| 8 | SLConfigDescriptor tag | 0x06 |

| **ObjectDescriptor(audio)** | | |
|---|---|---|
| 8 | ObjectDescriptor tag | 0x01 |
| 10 | ObjectDescriptorID | 3 |

| **ES_Descriptor(audio)** | | |
|---|---|---|
| 8 | ES_Descriptor tag | 0x03 |
| 16 | Es_ID | 4 |

| **DecoderConfigDescriptor(audio)** | | |
|---|---|---|
| 8 | DecoderConfigDescriptor tag | 0x04 |
| 8 | ObjectTypeIndication | 0x40 |
| 6 | StreamType | 0x05 |

| **DecoderSpecificInfo(audio)** | | |
|---|---|---|
| 8 | DecoderSpecificInfo tag | 0x05 |

| **SLConfigDescriptor(audio)** | | |
|---|---|---|
| 8 | SLConfigDescriptor tag | 0x06 |

| **ObjectDescriptor(stereoscopic data)** | | |
|---|---|---|
| 8 | ObjectDescriptor tag | 0x01 |
| 10 | ObjectDescriptorID | 4 |

| **ES_Descriptor(reference still image)** | | |
|---|---|---|
| 8 | ES_Descriptor tag | 0x03 |
| 16 | ES_ID | 8 |

| **DecoderConfigDescriptor(reference still image)** | | |
|---|---|---|
| 8 | DecoderConfigDescriptor tag | 0x04 |
| 8 | ObjectTypeIndication | 0x6C |
| 6 | StreamType | 0x04 |

| **DecoderSpecificInfo(reference still image)** | | |
|---|---|---|
| 8 | DecoderSpecificInfo tag | 0x05 |

| **SLConfigDescriptor(reference still image)** | | |
|---|---|---|
| 8 | SLConfigDescriptor tag | 0x06 |

| **ES_Descriptor(additional still image)** | | |
|---|---|---|
| 8 | ES_Descriptor tag | 0x03 |
| 16 | ES_ID | 9 |
| 1 | StreamDependenceFlag | 1 |
| 16 | DependsOn_ES_1D | 8 |

| **DecoderConfigDescriptor(additional still image)** | | |
|---|---|---|
| 8 | DecoderConfigDescriptor tag | 0x04 |
| 8 | ObjectTypeIndication | 0xA0(user private) |
| 6 | StreamType | 0x04 |

| **DecoderSpecificInfo(additional still image)** | | |
|---|---|---|
| 8 | DecoderSpecificInfo tag | 0x05 |

| **SLConfigDescriptor(additional still image)** | | |
|---|---|---|
| 8 | SLConfigDescriptor tag | 0x06 |

As illustrated in Table 2, in the stereoscopic data, ES_Descriptor does not exist in each of the two ODs, and two ES_Descriptors exist in a single OD. Also, "0xA0" (user private) is assigned as ObjectTypeIndication of DecoderConfigDescriptor (additional still image), and thus the existing 2D DMB terminal may disregard ObjectTypeIndication and satisfy compatibility.

LR_first 215 is for determine a reference image, and one bit is allocated. That is, when LR_first 215 is 0, the reference image may be defined as a left image. When LR_first 215 is 1, the reference image may be defined as a right image. Also, LR_first 215 may be used to sort a reference image stream in an actual TS. As an example, with respect to two streams including the left image and right image, when LR_first 215 is 0, which stream is a left stream on the actual stream may not be recognized although it is recognized that the left image is the reference image. According to the present invention, a method of recognizing which stream is the left stream is provided by associating LR_first 215 with an object descriptor. Specifically, in an object descriptor (OD) structure according to an embodiment of the present invention, an independent stream, which identically assigns "StreamType" and "ObjectTypeIndication" from among an independent/dependent stream defined under a single object descriptor structure to maintain compatibility with the 2D DMB terminal, is the left stream. Also, which stream is the left stream on the actual TS is recognized through a related ES_ID. That is, each media stream on the TS is divided through a PID. The ES_ID is associated with the PID. Accordingly, when the ES_ID is recognized, the PID may be recognized.

CompositionType 216 is for sorting a composition type of stereoscopic data, and two bits are allocated. In this instance, '00' indicates that the composition type is 'side by side' type, '01' indicates a two-images type, that is, left image and right image, and '10' through '11' are reserved. CompositionType 216 may be extended according to a composition type of subsequent data.

Although the configuration of the stereoscopic program information descriptor described above is provided for better understanding, the present invention is not limited to the described embodiment. Also, it will be apparent to those skilled in the related art that changes may be made.

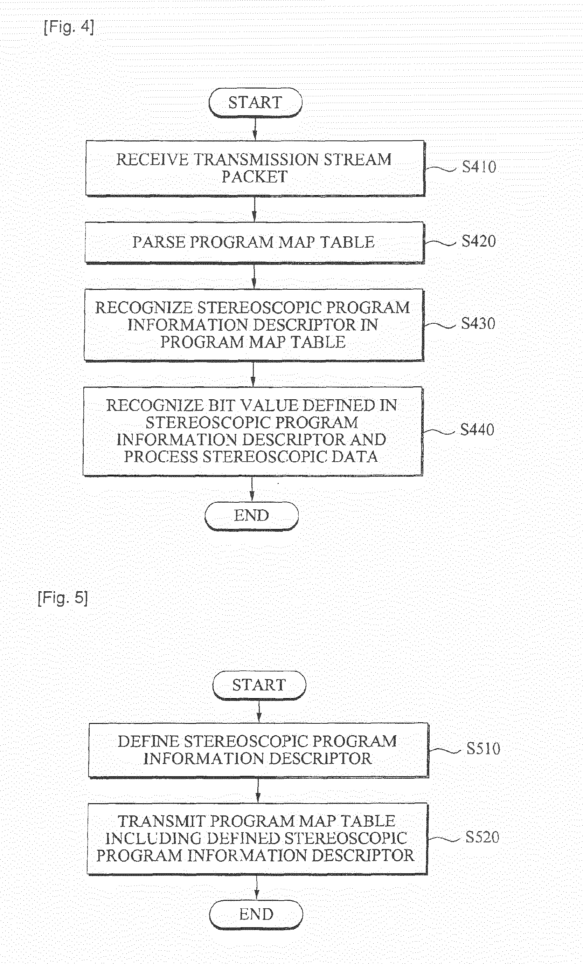

FIG. 4 is a flowchart illustrating a stereoscopic data processing method in a data receiving end according to an embodiment of the present invention.

In operation S410, a DMB terminal receives a TS packet transmitted in a form of a multiplexed TS packet.

In operation S420, a program map table is parsed from the received TS packet. In this instance, when a version of the program map table received at regular intervals is different from that of an existing program map table, the received program map table is updated.

In operation S430, a stereoscopic program information descriptor in the program map table is recognized. In this instance, an existing 2D terminal may disregard descriptor_tag 211 set as a user private value, and thereby may maintain compatibility with the 2D terminal.

In operation S440, each bit value defined in the stereoscopic program information descriptor is recognized. Also, whether 3D broadcasting contents or program includes a 3D service is recognized depending on the assigned bit value, and a parallax barrier control and detail module control are performed.

Hereinafter, the recognizing and controlling in operation S440 is described in greater detail with reference to the bit values of the stereoscopic program information descriptor illustrated in FIG. 3.

3D_Contents_flag 213 indicates whether broadcasting contents or program includes a 2D or 3D service. For example, when 3D_Contents_flag 213 is 0, it indicates a 2D broadcasting contents. When 3D_Contents_flag 213 is 1, it indicates a 3D broadcasting contents. In this instance, a 3D DMB terminal turns on or turns off a parallax barrier based on a value of 3D_Contents_flag 213. That is, when 3D_Contents_flag 213 is 1, it indicates the 3D broadcasting contents, and thus the parallax barrier is controlled to be turned on.

Also, when 3D_Contents_flag 213 is 1, that is, the 3D broadcasting contents is determined to be included, Stereoscopic_Service_Type 214 is referred to. When an assigned bit value is 0, it is recognized that a stereoscopic data service is provided, and when the assigned bit value is 1, it is recognized that a stereoscopic video service is provided.

LR_first 215 is referred to determine a reference image. When a corresponding bit value is 0, the reference image is a left image, and when the corresponding bit value is 1, the reference image is a right image.

CompositionType 216 is referred to to sort a composition type of stereoscopic data. '00', which is a corresponding bit value, indicates the composition type is 'side by side' type, '01' indicates a two-images type, that is, left and right image data, and '10' through '11' are reserved.

FIG. 5 is a flowchart illustrating a stereoscopic data processing method in a data transmitting end according to an embodiment of the present invention.

Referring to FIG. 5, the stereoscopic data processing method in a broadcasting data transmitting server is described. In operation S510, a new descriptor, that is, a stereoscopic program information descriptor, is defined in a program map table. The program map table is to be transmitted an external device, for example, a receiving terminal. As described above, whether broadcasting contents or program includes a 3D service may be recognized depending on an assigned bit value of the stereoscopic program information descriptor. Also, through the stereoscopic program information descriptor, a parallax barrier control and detail module control may be performed.

Specifically, a descriptor tag value in the stereoscopic program information descriptor is defined. The descriptor tag value may be defined as a user private value. When an existing terminal receives the stereoscopic program information descriptor including the descriptor tag value having the user private value, the existing terminal may disregard the stereoscopic program information descriptor, and thus the broadcasting data transmitting server may maintain compatibility with the existing terminal.

Also, 3D contents flag value in the stereoscopic program information descriptor may be defined. When the receiving terminal recognizes the 3D contents flag value in the stereoscopic program information descriptor, it may be recognized that the 3D service is included according to the 3D contents flag value. When the 3D service is included, the parallax barrier is turned on.

Also, a stereoscopic service type bit value in the stereoscopic program information descriptor may be defined. When the receiving terminal recognizes the stereoscopic service type bit value in the stereoscopic program information descriptor, which one of stereoscopic video service or stereoscopic data service is associated with received data according to the stereoscopic service type bit value may be recognized. A method of sorting a service may not be provided in a current DMB. Accordingly, when a bit of service type is assigned, each service is sorted, and various 3D services exist, types of services may be expanded.

Also, a reference image bit value in the stereoscopic program information descriptor may be defined. When the receiving terminal recognizes the reference image bit value in the stereoscopic program information descriptor, which one of a left image and a right image is a reference image of received data is indicated according to the reference image bit value.

Also, a data type bit value in the stereoscopic program information descriptor may be defined. When the receiving terminal recognizes the data type bit value in the stereoscopic program information descriptor, a data type of received data may be sorted according to the data type bit value in the stereoscopic program information descriptor.

In operation S520, the program map table including the stereoscopic program information descriptor is transmitted to the external device, for example, the receiving terminal, in a form of TS packet.

Although a few embodiments of the present invention have been shown and described, the present invention is not limited to the described embodiments. Instead, it would be appreciated by those skilled in the art that changes may be made to these embodiments without departing from the principles and spirit of the invention, the scope of which is defined by the claims and their equivalents.

Further exemplary aspects of the invention are described as follows.
[1] A stereoscopic data processing method, comprising:
   receiving a transmission stream (TS) including a program map table from an external device;
   recognizing stereoscopic program information descriptor in the program map table; and
   recognizing defined bit values in the stereoscopic program information descriptor and processing data.
[2] The stereoscopic data processing method of example 1, wherein the recognizing and processing comprises:
   recognizing three dimensional (3D) contents flag value in the stereoscopic program information descriptor, the 3D contents flag value indicating whether broadcasting contents or program includes a 3D service; and
   turning on a parallax barrier according to a result of the recognizing.
[3] The stereoscopic data processing method of example 2, wherein the recognizing and processing further comprises:
   recognizing a service type bit value in the stereoscopic program information descriptor, the service type bit value indicating a service type; and
   recognizing an elementary stream structure of an object descriptor based on the recognized service type bit value.
[4] The stereoscopic data processing method of example 2, wherein the recognizing and processing further comprises:
   recognizing a reference image bit value indicating which one of a left image or
   right image is a reference image of the data; and
   recognizing whether the reference image of the data is the left image or right image according to the recognized reference image bit value.
[5] The stereoscopic data processing method of example 4, wherein the recognizing and processing further comprises:
   after recognizing whether the reference image of the data is the left image or right image according to the recognized reference image bit value, recognizing a "StreamType" value and a "ObjectTypelndication" value of an elementary stream defined under an object descriptor structure, and recognizing whether the elementary stream is a reference image elementary stream based on the recognized "StreamType" value and "ObjectTypelndication" value; and
   recognizing a reference image stream of a transmission stream as the left image or right image, the transmission stream corresponding to an elementary stream identification (ID) of the recognized reference image elementary stream.
[6] The stereoscopic data processing method of example 2, wherein the recognizing and processing further comprises:
   recognizing a data type bit value for sorting a composition type of the data; and
   recognizing the composition type of the data based on the recognized data type bit value.
[7] A stereoscopic data processing method, comprising:
   defining a stereoscopic program information descriptor in a program map table, the stereoscopic program information descriptor including property information of data and
   control information about a receiving terminal; and
   transmitting, to an external device, the program map table where the stereoscopic program information descriptor is defined.
[8] The stereoscopic data processing method of example 7, wherein the defining
   defines a descriptor tag value in the stereoscopic program information descriptor, and defines the descriptor tag value as a user private value.
[9] The stereoscopic data processing method of example 7, wherein the defining
   defines a 3D contents flag value in the stereoscopic program information descriptor, the 3D contents flag value indicating whether broadcasting contents or program includes a 3D service.
[10] The stereoscopic data processing method of example 9, wherein whether a parallax barrier of the receiving terminal is on or off is determined based on the 3D contents flag value.
[11] The stereoscopic data processing method of example 9, wherein the defining
   defines a stereoscopic service type bit value in the stereoscopic program information descriptor, the stereoscopic service type bit value indicating which one of a stereoscopic image service or stereoscopic data service is associated with transmitted data, and the stereoscopic service type bit value is set to recognize an elementary stream structure of an object descriptor.
[12] The stereoscopic data processing method of example 9, wherein the defining
   defines a reference image bit value in the stereoscopic program information descriptor, the reference image bit value indicating which one of a left image or right image is a reference image of transmitted data.
[13] The stereoscopic data processing method of example 9, wherein the defining
   defines a data type bit value in the stereoscopic program information descriptor, the data type bit value sorting a composition type of transmitted data.
[14] A stereoscopic data processing apparatus, comprising:
   a program map table parsing unit receiving a transmission stream from an external device and parsing a program map table included in the received transmission stream;
   a descriptor recognition unit recognizing a stereoscopic program information descriptor in the program map table; and
   an operation control unit recognizing whether broadcasting contents or program includes a 3D service based on a bit value of the stereoscopic program information descriptor recognized in the descriptor recognition unit, and controlling an operation of a receiving terminal according to whether the 3D service is included.
[15] The stereoscopic data processing apparatus of example 14, wherein the operation control unit turns on a parallax barrier of the receiving terminal when it is recognized that the broadcasting contents or program includes the 3D service based on the bit value.
[16] The stereoscopic data processing apparatus of example 14, wherein the operation control unit controls a detail module of the receiving terminal when it is recognized that the broadcasting contents or program includes the 3D service based on the bit value.

## Claims

1. A stereoscopic data processing apparatus, comprising:
a program map table parsing unit configured to receive a transmission stream including stereoscopic program information descriptor from an external device;
a descriptor recognition unit configured to recognize stereoscopic service type bit values in the stereoscopic program information descriptor; and
an operation control unit configured to control an operation of a receiving terminal based on the stereoscopic service type bit values,
wherein the stereoscopic service type bit values indicates a type of stereoscopic service that is received.

2. The stereoscopic data processing apparatus of claim 1, the program map table parsing unit parses the program map table included in the received transmission stream.

3. The stereoscopic data processing apparatus of claim 1, wherein the operation control unit controls a parallax barrier of the receiving terminal based on the stereoscopic service type bit values

4. The stereoscopic data processing apparatus of claim 3, wherein the operation control unit turns on the parallax barrier of the receiving terminal when the stereoscopic service type bit values indicates broadcasting contents or program includes the 3D service

5. The stereoscopic data processing apparatus of claim 1, wherein the operation control unit controls a detail module of the receiving terminal when the stereoscopic service type bit values indicates broadcasting contents or program includes the 3D service
